# EUROPÄISCHE PATENTSCHRIFT

(11) **EP 1 007 313 B1**
(45) Veröffentlichungstag und Bekanntmachung des Hinweises auf die Patenterteilung: **29.08.2001**
(21) Anmeldenummer: 98941238.2
(22) Anmeldetag: 29.06.1998
(51) Int. Cl.: B29C 44/00, B29C 44/04, D04H 1/68

(54) **VERFAHREN ZUR HERSTELLUNG VON FLÄCHENGEBILDEN UND SCHAUMFÄHIGES MATERIAL ZUR HERSTELLUNG VON FLÄCHENGEBILDEN**
METHOD FOR THE PRODUCTION OF FLAT STRUCTURES AND FOAMABLE MATERIAL FOR THE PRODUCTION OF SAID STRUCTURES
PROCEDE POUR PRODUIRE DES STRUCTURES PLATES ET UN MATERIAU MOUSSANT SERVANT A LA PRODUCTION DESDITES STRUCTURES

(30) Priorität: 26.08.1997 DE 19737013
(43) Veröffentlichungstag der Anmeldung: 14.06.2000
(73) Patentinhaber: Möller Plast GmbH, 33649 Bielefeld (DE)
(72) Erfinder: BECKMANN, Friedhelm, D-32120 Hiddenhausen (DE); HESCH, Rolf, D-32657 Lemgo (DE)
(74) Vertreter: Schirmer, Siegfried, Dipl.-Ing.
(86) Internationale Anmeldenummer: DE9801765
(87) Internationale Veröffentlichungsnummer: WO9910579

(56) Entgegenhaltungen:
- EP-A- 0 657 266
- DE-A- 1 710 622
- DE-A- 3 918 360
- US-A- 4 392 876
- US-A- 4 626 390
- US-A- 5 384 193
- PATENT ABSTRACTS OF JAPAN vol. 016, no. 195 (M-1246), 12. Mai 1992 & JP 04 028534 A (TEIJIN LTD), 31. Januar 1992
- DATABASE WPI Section Ch, Week 9435 Derwent Publications Ltd., London, GB; Class A83, AN 94-283794 XP002094425 & JP 06 212502 A (FUREKUSI KK) , 2. August 1994

## Beschreibung

Die Erfindung betrifft ein Verfahren zur Herstellung von Flächengebilden unter Verwendung einer Mischung aus Fasern und schaumfähigem Material, das durch Energiezufuhr aufgeschäumt wird und ein schaumfähiges Material zur Herstellung dieser Flächengebilde.

Vliese, Metten, Dämm- und Polsterelemente aus Fasern, Naturfasern, Holzwolle, Stroh. Pflanzenhalmen u. ä. sind in unterschiedlicher Ausführungsform bekannt:
- Mit mechanischer Verbindung durch Nadelung, Steppung, Bindung, Fiechtung,
- mit Verbindung durch Thermobonding,
- mit Verbindung durch einen Klebstoff, der durch Tauchen. Aufgießen oder Besprühen aufgebracht wird,
- mit Verbindung durch einen Klebstoff, der mit spezielien Mischern oder Beleimungsmaschinen oder auch Blow-Lines aufgebracht wird, wobei letztere Techniken nur bei kurzen Fasarn bis ca. 25 mm anwendbar sind.

Bekannt sind ferner Schaumwerkstoffe und Schaumverbundkörper, bei denen ein Schaum die Matrix darstellt, in welche Fasern. Gewirke oder Gelege zwecks Bewehrung integriert sind.

Oben genannte Erzeugnisse und Verfahren weisen eine Reihe von Beschränkungen und Nachteile auf. Zu den schwerwiegendsten zählen:
- Nadeln, Steppen, Flechten führt zwangsläufig zu einer Erhöhung der Dichte. Dadurch werden die Dämmeigenschaften ebenso wie die Polstereiganschaften stark gemindert. Höhere Dichte bedeutet gleichzeitig auch einen höheren Rohstoffverbrauch;
- Thermobonding mit Ein- oder Bikomponenten-Polymerfasern hat sich für viele Anwendungsgebiete sehr gut bewährt. Polymerfasern sind aber teuer und wenig ökologisch, da bei der Synthese erhebliche Mengen an Prozeßenergie benötigt werden, was entsprechend hohe Emissionen zur Folge hat. Um dies zu vermeiden, werden Mischungen aus Naturfasern und Polynerfasern überall dort verwendet, wo keine Notwendigkeit besteht, reine Polymerfasern einzusetzen. Aber auch bei Fasermischungen bewegt sich der Polymerfaseranteil meist nicht unter 15 %, oft sogar über 50 %;
- Tauchen und Sprünen erfolgt überwiegend mit Elastomeren, an zweiter Stelle mit Duromeren und für gewisse Anwendungsgebiete auch mit mineralischen Bindemitteln. Aber der Verbrauch an Bindemitteln ist hoch.

Ebenfalls hoch ist die Dichte. Hoher Materialverbrauch bedeutet hche Kosten. Hohe Dichte bedeutet geringe Wärmedämmung.

Nach dem Stand der Technik werden als Bindemittel eingesetzte Stoffe, z. B. Polymerfasern über ihren Querschnitt voll versponnen oder extrudiert, Tränk- oder Sprühmassen satt deckend, überwiegend voll benetzend und umhüllend aufgetragen und dann auf unterschiedliche Weise ausgehärtet.

Es ist bekannt, Dämmstoffe aus Naturfasern herzustellen. Da Näturfasern bis auf wenlge Ausnahmen kein hohes Rückfederungsvermögen besitzen und Vliese aus Naturfasern daher eine schlechte Formbeständigkeit aufweisen, fallen sie im Laufe der Zeit in sich zusammen und verlieren einen erheblichen Teil ihrer Dämmwirkung. Um dies zu verhindern, werden in der Regel um 15 % sprödere Polymerfasern als "Stützfasern" zugemischt. Indem man die Vliese aus Natur- und Stützfasern einer Wärmebehandlung unterzieht und dabei die Polymerfasern anschmilzt, erreicht man, daß die Polymerfasern an ihren Kreuzungspunkten miteinander verschmelzen (Thermobonding). Das bewirkt einen dreidimensionalen Verbund durch welche die Stützwirkung der Polymerfasern erhöht wird. Hierfür werden volle Polymerfasern verwendet, also Fasern, deren gesamter Querschnitt aus einem Polymer besteht oder zweien, bei sogenannten Bikomponentenfasern.

Aus JP-A-04 028 534 ist ein Verfahren zur Herstellung von Verbundteilen bekannt, die aus Verstärkungsfasem und geschäumtem Harz als Matrix gebildet werden. Das Aufschäumen erfolgt nachträglich und dient zur besseren Durchdringung der Verstärkungsfasern. Die so hergestellten Verbundreile besitzen eine große Verdichtung mit homogener Struktur. Zwischen den Fasern bleiben fast keine Lufteinschlüsse übrig. Das beim Schäumen entstehende Gas verbleibt nicht im Verbundteil, sondern entweicht durch einen Spalt in der Form. Nach diesem Stand der Technik wird eine homogene vollflächige Verbindung von Faser zu Faser erreicht und damit Verbundteile mit einer großen Verdichtung.

Nach der US-A-5 384 193 ist eine Füllung vorgesehen, die aus einer Mischung von unbrennbaren Fasern mit Naturfasern besteht. Solche losen Füllungen finden zum Beispiel bei Thermaljacken Verwendung.

Ausgehend von JP-A-04 028 534 liegt der Erfindung die Aufgate zugrunde, ein Verfahren zur herstellung von Flächengebilden zu schaffen, welches sich durch folgende Vorteile auszeichnet:
- Weitestgehende Absankung der Dichten, um Gewicht und somit Material zu sparen. Je geringer die Dichte, um so besser die Dämmwirkung von Dämmstoffen. Je seringer das Gewicht, um so geringer ist der Brennstoffverbrauch bei Fahrzeugen und somit die Emissionen. Geringes Gewicht bedeutet in der Regel auch Verminderung der Kosten.
- Beibehaltung hoher Festigkeitswerte trotz Absenkung der Dichte.
- Weitgehendst möglicha Absenkung des Bindemittelverbrauchs der für den Zusammenhalt von Bauteilen erforderlich ist. Bindemittel sind fast immer erheblich teurer als z. B. faserige oder faserhaltige Naturstoffe. Sparsamer Bindemittelverbrauch senkt daher die Kosten. Da die meisten Bindemittel synthetisch erzeugt werden, kann durch sparsamen Bindemittelverbrauch auch ein Beitrag zur Verminderung vcn Emissionen geleistet werden.

Diese Aufgabe wird erfindungsgemäß durch ein Verfahren zur Herstellung von Flächengebilden unter Verwendung einer Mischung aus Fasern und schaumfähigem Material, das durch Energiezufuhr aufgeschäumt wird, gelöst, wobei die Fasern zu einem räumlichen Netzwerk geringer Dichte miteinander partial verbunden werden, wobei die darin enthaltenen Polymere ohne Gegendruck frei expandieren und das geschäumte oder schaumfähige Material in Tropfenform in die Fasern eingebracht wird und durch Expansion der Schaumkörperchen die Naturfasern knotenpunktartig miteinander verklebt und von innen abgestützt werden.

In Ausgestaltung der Erfindung wird das schaumfähige oder das ganz oder teilweise geschäumte Material aus synthetischen Fasern gebildet. Vorteilhafterweise wird das schaumfähige oder das ganz oder teilweise geschäumte Material in fadenförmige oder bändchenförmige Gestalt verwendet. Weitere zweckmäßige Ausgestaltungen des erfindungsgemäßen Verfahrens werden in den weiteren Unteransprüchen aufgezeigt.

Durch die Verwendung geschäumter oder nachträglich aufschäumbarer Fasern wird eine starke Vergrößerung der wirksamen Oberfläche erreicht. Daraus ergibt sich eine Verminderung des Bindemittel- oder Bindefaserverbrauchs ebenso wie der Dichte. Materialverbrauch und Kosten werden vermindert. Die Dämmwerte werden verbessert. Emissionen werden gesenkt.

Das Aufschäumen der Bindefasern oder andersartig gestalteten Bindemitteln soll auf unterschiedliche Weise erfolgen:
- Es können Treibmittel in die Schmelze vor dem Verspinnen der Fasern eingearbeitet werden, die erst nachträglich durch Einleitung einer höheren Energie als für die Erzeugung der Schmelze erforderlich, aktiviert werden. Es entsteht also zunächst eine ungeschäumte Vollfaser/Borste, die dann erst nach Erzeugung eines Vlieses, Gewebes oder sonstigen Flächengebildes durch Energieeinleitung zum Aufschäunen gebracht wird.
- Die Schmelze kann aber auch vor dem Verspinnen chemisch oder mechanisch geschäumt werden, so daß eine bereits geschäumte Faser aus der Spinndüse austritt.
- Die Schäumung kann auch dadurch erfolgen, daß eine Hohlnadel in der Spinndüse angeordnet wird, durch die Luft/Gas in die in Entstehung befindliche Faser/Borste eingeblasen wird, vorzugsweise pulsierend, um so einen Wechsel von aufgeblähten und nicht aufgeblähten Faden-/Borstensegmenten zu erzeugen, um auf diese Weise die schaumähnliche Struktur der Faser/Borste formbeständiger zu gestalten.
- Die schaumähnliche Struktur kann auch erzeugt werden, indem in bekannter Weise Hohlfäden gesponnen werden, die dann in vorgegebenen Abständen zwecks Kammerung der Luft querverschweißt werden.

Die kosten- und materialsparenden Wirkungen des Aufschäumens zwecks Herstellung von Flächengebilden kann noch weiter gesteigert werden, indem man das geschäumte oder noch aufzuschäumende Bindemittel nicht vollflächig, satt oder weitgehend deckend oder umhüllend einsetzt, sondern punktförmig oder teilflächig, nachfolgend als "partial" bezeichnet.

Zweckmäßige Ausgestaltungen der Erfindung sind in den übrigen Unteransprüchen aufgezeigt.

Die Erfindung wird an einigen Beispielen erläutert:

### 1. Beispiel:

Es werden Polymerfasern verwendet, die bereits beim Spinnen geschäumt wurden oder die nachträglich geschäumt werden. Sie verbinden geringe Dichte, geringen Rohstoffverbrauch, geringe Emissionen mit höherer wirksamer Oberfläche. Erfindungsgemäß lassen sich auf diese Weise Dämmstoffe mit noch geringerer Dichte erzeugen als bei Verwendung voller Polymerfasern. Geringere Dichte bedeutet aber eine Verbesserung der Dämmwerte. Die Stütz- und Rückfederungsfunktion der Polymere werden durch die Schäumung ebenfalls gesteigert.

Insbesondere nachträglich aufschäumbare Fasern bieten eine Vielzahl von technischen Möglichkeiten, aufgrund des beim Aufschäumen entstehenden Innendrucks. Dieser kann in mehrfacher Weise genutzt werden.
- Läßt man das Gelege bzw. die darin enthaltenen Polymere frei expandieren, also ohne Gegendruck, so führt das insgesamt zu einer Volumensvergrößerung des Geleges und damit zu einer Verminderung der Dichte über das naturgegebene Maß hinaus. Für die Herstellung von Dämmstoffen bietet das den Vorteil, geringere Vliesdichten zu bekommen, als dies nach dem Stand der Technik mit Fasermischungen möglich ist und somit bessere Dämmwerte.
- Begrenzt man dagegen die Höhe/Volumen des Geleges, z. B. durch eine Doppelbandpresse, so bewirkt der entstehende Aufschäumdruck, daß sich die Fasern an ihren Kreuzungspunkten fester gegeneinander pressen. Es entsteht eine flächigere Verbindung als bei freier Aufschäumung und somit eine höhere Festigkeit der Verbindung.
- Geschäumte oder nachträglich aufschäumbare Fasern/Borsten/Bändchen u. ä. können auch formverpreßt werden. Bei Mischungen mit Polymerfasern muß dabei erst die Plastifizierung durch Energiezufuhr und dann die Verpressung in der kalten Form erfolgen. Dabei können Formteile mit zonenweise unterschiedlicher Verdichtung hergestellt werden, z. B. eine hochverdichtete Randzone mit dazwischenliegenden ebenfalls hoch- oder höherverdichteten Rippen, Stegen, Prägungen etc., während der Rest des Geleges unverdichtet oder gering verdichtet bleibt. Bei Kombinationen mit Duromeren in noch nicht vernetztem Zustand, erfolgt die Formpressung in der heißen Form.

### 2. Beispiel:

Um gute Rückfederungseigenschaften bei Polstermaterialien aus Naturfasern zu erhalten, bedarf es bei den aufschäumbaren Kunststoff- oder Naturstoffderivatzumischungen oder auch elastischer Naturstoffe (Latex) nicht unbedingt einer Faserstruktur, da bei dieser Anwendung kaum Zug- und Biegespannungen auftreten. Hier genügt es, wenn die Naturfasern von innen her durch elastische Schaumkörperchen abgestützt werden und von ihnen ihre Rückfederungskräfte erhalten. Bei derartigen Anwendungsgebieten ist vorgesehen, mechanisch oder reaktiv geschäumte Elastomere, Thermoelaste oder Polymere zwischen die Fasern einzubringen oder solche, die nachträglich aufgeschäumt werden können. Sie bewirken gleichzeitig eine punktförmige Verbindung der Fasern an den Stellen, an denen diese durch geschäumte oder aufschäumbare Tröpfchen, Kügelchen oder vergleichbare Gebilde hindurchgehen und auch die federnde Abstützung von innen. Technisch ist diese Ausführungsform leichter umzusetzen, bedarf geringerer Mengen an Polymeren, Elastomeren etc. und reicht für polsternde Aufgaben oder zur Erzielung von Formbeständigkeit aus.

### 3. Beispiel:

Die Möglichkeiten des Beispiels 1 und des Beispiels 2 lassen sich darüber hinaus in vielfacher Weise miteinander kombinieren.

Bei Einsatz von langen Naturfasern ist die Anwendung von Schaumtröpfchen anstelle von geschäumten oder aufschäumbaren Fasern die kostengünstigere und ökologischere Variante. Wird aber auch eine höhere Querzugsfestigkeit und evtl. Biegefestigkeit benötigt, können geschäumte oder aufschäumbare Fasern in geringen Mengen den Naturfasern zugemischt werden, um über Thermobonding eine räumliche Vernetzung als Ergänzung zu den rückfedernden Eigenschaften der tröpfchen- oder kugelförmigen Schaumkörperchen zu bewirken.

In Fortentwicklung dieses Gedankens lassen sich extrem leichte und dennoch hochfeste Verbunde aus Fasern, vorzugsweise Naturfasern als Matrix, geschäumten oder aufschäumbaren Polymerfasern zur Bildung eines durch Thermobonding verschweißten räumlichen Netzwerks sowie Schaumkörperchen dazwischen, um das gesamte System von innen her zu expandieren und abzustützen, herstellen. Ein solches System würde eine gewisse Analogie zum knöchernen Balkenwerk eines Schenkelhalsknochens darstellen, der aus einem Netzwerk von Knochenplättchen mit dazwischenliegenden Hohlräumen besteht. Dabei überwiegen die Hohlräume. Dieses Netzwerk ergibt, wie der Knochen beweist, trotz der geringen Knochenmasse ein extrem hohes Maß an Festigkeit. Ein auf diese Weise hergestelltes Formteil würde volumenmäßig überwiegend aus Luft bestehen. Lange Naturfasern und geschäumte Polymerfasern würden das räumliche Netzwerk bilden. Die zusätzlich eingebrachten Schaumkörperchen würden durch Expansion des Gesamtsystems nicht nur die Dichte zusätzlich vermindern, sondern auch die Naturfasern zusätzlich knotenpunktartig miteinander verkleben.

### 4. Beispiel

Auf der Grundlage der in Beispiel 1 bis 3 genannten Möglichkeiten ist die Herstellung von hochfesten, extrem leichten Verbundwerkstoffen, z. B. Karosserieteilen möglich. Ein Gelege mit den genannten aufschäumbaren Komponenten in Faser- und/oder Tröpfchenform könnte beispielsweise in das Außenblech einer PKW-Tür eingelegt und dort aufgeschäumt werden. Durch den Aufschäumdruck würden die aufschmelzbaren Bestandteile des Geleges, je nach Art des aufschmelzbaren Materials mit oder ohne Primerung mit dem Blech eine feste Verbindung durch Anschmelzung oder Anschäumung eingehen. Das in Beispiel 3 angeführte knochenhalsanaloge System von räumlich angeordneten und miteinander durch Knotenpunkte verbundene System von Langfasern mit großen Hohlräumen dazwischen und punktueller Abstützung und Verklebung durch Schaumkörperchen ergibt im Zusammenwirken mit dem Außenblech eine Tür von besonders geringem Gewicht und besonders hoher Biegesteifigkeit. Das räumliche Netzwerk von Langfasern mit den beschriebenen knotenpunktförmigen Verbindungen würde im Gegensatz zu vergleichbaren Formteilen nach dem Stand der Technik eine wesentlich höhere Festigkeit bei sehr viel geringerem Gewicht ergeben. Formteile nach dem Stand der Technik kennen derartige Netzwerke noch nicht. Nach dem Stand der Technik werden die Festigkeiten derartiger Formteile immer noch-über die Dichte erzeugt.

Analog lassen sich auch Formteile für beispielsweise Türinnenverkleidungen herstellen, indem die aktivierten Polymerfasern und/oder Schaumkörperchen mit der Dekoroberfläche eine Verschmelzung bzw. Verschäumung eingehen und den Verbund herstellen. Der Aufschäumdruck kann dabei auch als Verformdruck ausgenutzt werden.

## Patentansprüche

1. Verfahren zur Herstellung von Flächengebilden unter Verwendung einer Mischung aus Fasern und schaumfähigem Material, das durch Energiezufuhr aufgeschäumt wird, wobei die Fasern zu einem räumlichen Netzwerk geringer Dichte miteinander partial verbunden werden, wobei die darin enthaltenen Polymere ohne Gegendruck frei expandieren und das geschäumte oder schaumfähige Material in Tropfenform in die Fasern eingebracht wird und durch Expansion der Schaumkörperchen die Naturfasern knotenpunktartig miteinander verklebt und von innen abgestützt werden.

2. Verfahren nach Anspruch 1, **dadurch gekennzeichnet**, daß das schaumfähige oder das ganz oder teilweise geschäumte Material aus synthetischen Fasern gebildet wird.

3. Verfahren nach Anspruch 1 oder 2, **dadurch gekennzeichnet**, daß das schaumfähige oder das ganz oder teilweise geschäumte Material in fadenförmiger oder bändchenförmiger Gestalt verwendet wird.

4. Verfahren nach einem der Ansprüche 1 bis 3, **dadurch gekennzeichnet**, daß das geschäumte oder nachträglich schäumbare Material mit nicht schäumbaren Materialien hoher Festigkeit und hoher Elastizität als Ummantelung im Schmelzebad kombiniert wird.

5. Verfahren nach Anspruch 4, **dadurch gekennzeichnet**, daß die Kombination von aufgeschäumten oder aufschäumbarem Material mit festem, hochfestem und elastischem Material als Mantel oder Querschnittssegment durch Koextrusion erzeugt wird.

6. Verfahren nach einem der Ansprüche 1 bis 5, **dadurch gekennzeichnet**, daß die unterschiedlichen Faserarten miteinander vermischt werden.

7. Verfahren nach einem der Ansprüche 1 bis 6, **dadurch gekennzeichnet**, daß die Tröpfchen des geschäumten oder schäumbaren Materials bei der Gelegebildung zwischen die Fasern eingebracht werden.

8. Verfahren nach einem der Ansprüche 1 bis 7, **dadurch gekennzeichnet**, daß das Fasermaterial an den Kreuzungs- bzw. Berührungspunkten durch Aufschäumen und/oder Thermobonding zu einem räumlichen Netzwerk miteinander verbunden wird.

9. Verfahren nach einem der Ansprüche 1 bis 8, **dadurch gekennzeichnet**, daß geschäumte oder aufschäumbare Fasern in geringen Mengen den Naturfasern zugemischt werden und über Thermobonding eine räumliche Vernetzung erfolgt.

10. Verfahren nach einem der Ansprüche 1 bis 9, **dadurch gekennzeichnet**, daß Fasern mit einem Schlankheitsgrad> 50 verwendet werden.

11. Verfahren nach einem der Ansprüche 1 bis 10, **dadurch gekennzeichnet**, daß bei Kombination mit Duromeren im noch nicht vernetzten Zustand die Formpressung in der heißen Form durchgeführt wird.

12. Verfahren nach einem der Anspruche I bis 11, **dadurch gekennzeichnet**, daß bei Mischungen mit Polymerfasern die Plastizifizierung durch Energiezufuhr erfolgt und anschließend eine Verpressung in der kalten Form durchgeführt wird

13. Verfahren nach Anspruch 11 oder 12, **dadurch gekennzeichnet**, daß Formteile mit zonenweise unterschiedlicher Verdichtung hergestellt werden.

14. Schaumfähiges Material zur Herstellung von Flächengebilden unter Verwendung von Fasern nach einem der Ansprüche 1 bis 13. gekennzeichnet durch Hohlfasern, deren Hohlraum durch Querwände oder Einschnürungen unterbrochen ist.

15. Schaumfähiges Material nach Anspruch 14, **dadurch gekennzeichnet**, daß zur Schäumung eine Hohlnadel in der Spinndüse angeordnet ist.

16. Schaumfähiges Material nach Anspruch 15, **dadurch gekennzeichnet**, daß über die Hohlnadel während der Extrusion Luft/Gas pulsierend einblasbar ist.

17. Schaumfähiges Material nach einem der Ansprüche 14 bis 16, **dadurch gekennzeichnet**, daß die Hohlfasern in vorgegebenen Abständen durch Querverschweißung gekammert sind

## Claims

1. Method of producing flat bodies with use of a mixture of fibres and foamable material which can be foamed by the feed of energy, wherein the fibres are partially connected together into a three-dimensional network of low density, wherein the polymers contained therein freely expand without counter-pressure and the foamed or foamable material is introduced in drop form into the fibres and the natural fibres are glued together in node point manner and supported from within by expansion of the small foam bodies.

2. Method according to claim 1, **characterised in that** the foamable or the entirely or partially foamed material is formed from synthetic fibres.

3. Method according to claim 1 or 2, **characterised in that** the foamable or entirely or partially foamed material is used in a strand-shape or striplet-shaped form.

4. Method according to one of claims 1 to 3, **characterised in that** the foamed or subsequently foamable material is combined in the melt bath with non-foamable materials of high strength and high elasticity as a sheathing.

5. Method according to claim 4, **characterised in that** the combination of foamed or foamable material with strong, high-strength and elastic material as a casing or cross-section segment is produced by co-extrusion.

6. Method according to one of claims 1 to 5, **characterised in that** the different kinds of fibres are mixed together.

7. Method according to one of claims 1 to 6, **characterised in that** the droplets of the foamed or foamable material are introduced between the fibres in the formation of the bed.

8. Method according to one of claims 1 to 7, **characterised in that** the fibre material is connected together into a three-dimensional network at the crossing points or contact points by foaming and/or thermobonding.

9. Method according to one of claims 1 to 8, **characterised in that** the foamed or foamable fibres are admixed in small quantities to the natural fibres and effect a three-dimensional cross-linkage by thermobonding.

10. Method according to one of claims 1 to 9, **characterised in that** fibres with a coefficient of fineness greater than 50 are used.

11. Method according to one of claims 1 to 10, **characterised in that** in the case of combination with thermosetting plastics materials in the not yet cross-linked state the press-moulding is carried out in the hot mould.

12. Method according to one of claims 1 to 11, **characterised in that** in the case of mixtures with polymer fibres the plasticising is carried out by energy feed and subsequently a pressing in a cold mould is undertaken.

13. Method according to claim 11 or 12, **characterised in that** moulded parts with zonally differing density are produced.

14. Foamable material for production of flat bodies with use of fibres according to one of claims 1 to 13, characterised by hollow fibres, the cavity of which is interrupted by transverse walls or constrictions.

15. Foamable material according to claim 14, **characterised in that** for the foaming a hollow needle is arranged in the spinning nozzle.

16. Foamable material according to claim 15, **characterised in that** air/gas can be blown in, in pulsed manner, by way of the hollow needle during the extrusion.

17. Foamable material according to one of claims 14 to 16, **characterised in that** the hollow fibres are chambered at predetermined spacings by cross-welding.

## Revendications

1. Procédé de fabrication de structure de surface en forme de nappe en utilisant un mélange de fibres et de matière expansible que l'on fait expanser par apport d'énergie, selon lequel
les fibres sont reliées partiellement les unes aux autres pour former un réseau tridimensionnel de faible densité,
puis on fait expanser sans pression antagoniste les polymères contenus dans la nappe et on introduit la matière expansée ou susceptible d'être expansée sous forme de gouttelettes dans les fibres, et l'expansion des particules de mousse colle ponctuellement les fibres naturelles pour former des noeuds, et les soutient de l'intérieur.

2. Procédé selon la revendication 1,
**caractérisé en ce que**
la matière expansible, ou expansée totalement ou partiellement, est formée de fibres de synthèse.

3. Procédé selon la revendication 1 ou 2,
**caractérisé en ce que**
la matière expansible, ou expansée totalement ou partiellement, est utilisée à l'état de fils ou de petits rubans.

4. Procédé selon l'une quelconque des revendications 1 à 3,
**caractérisé en ce que**
la matière expansée ou susceptible d'être expansée à posteriori est combinée à des matières non expansibles de forte résistance et de forte élasticité, par enrobage dans un bain de matière fondue.

5. Procédé selon la revendication 4,
**caractérisé en ce qu**'
on réalise la combinaison de matières expansées ou expansibles avec une matière solide, très résistante et élastique comme enveloppe ou comme segment de section par co-extrusion.

6. Procédé selon l'une quelconque des revendications 1 à 5,
**caractérisé en ce qu**'
on mélange différents types de fibres.

7. Procédé selon l'une quelconque des revendications 1 à 6,
**caractérisé en ce que**
les gouttelettes de matière expansée ou susceptible d'être expansée sont introduites entre les fibres lors de la formation de la nappe.

8. Procédé selon l'une quelconque des revendications 1 à 7,
**caractérisé en ce qu**'
on relie la matière de fibres au point d'intersection ou au point de contact par expansion et/ou thermocollage pour former un réseau tridimensionnel.

9. Procédé selon l'une quelconque des revendications 1 à 8,
**caractérisé en ce qu**'
on ajoute des fibres expansées ou expansibles en faible quantité aux fibres naturelles et on fait une réticulation tridimensionnelle par thermocollage.

10. Procédé selon l'une quelconque des revendications 1 à 9,
**caractérisé en ce qu**'
on utilise des fibres ayant un degré de minceur supérieur à 50.

11. Procédé selon l'une quelconque des revendications 1 à 10,
caractérisé par
la combinaison de duromère à l'état non encore réticulé, avec compression dans un moule chaud.

12. Procédé selon l'une quelconque des revendications 1 à 11,
**caractérisé en ce qu**'
en ajoutant des fibres de polymères, on plastifie par apport d'énergie puis on comprime dans un moule froid.

13. Procédé selon l'une quelconque des revendications 11 ou 12,
**caractérisé en ce qu**'
on fabrique des pièces moulées ayant une densité différente d'une zone à l'autre.

14. Matière expansible pour la fabrication de structures en nappe en utilisant des fibres selon l'une des revendications 1 à 13,
caractérisée par
des fibres creuses dont la cavité est interrompue par des cloisons transversales ou des parties rétrécies.

15. Matière expansible selon la revendication 14,
**caractérisée en ce que**
l'expansion se fait à l'aide d'une aiguille creuse placée dans la buse de filage.

16. Matière expansible selon la revendication 15,
**caractérisée en ce que**
l'aiguille creuse insuffle de l'air/gaz de manière pulsée pendant l'extrusion.

17. Matière expansible selon l'une quelconque des revendications 14 à 16,
**caractérisée en ce que**
les fibres creuses comportent des chambres réalisées par des soudures transversales prévues à des intervalles donnés.
